# FASCICULE DE BREVET EUROPEEN

(11) **EP 4 532 299 B1**
(45) Date de publication et mention de la délivrance du brevet: **28.01.2026**
(21) Numéro de dépôt: 23725385.1
(22) Date de dépôt: 19.04.2023
(51) Int. Cl.: B62D 25/02, B62D 25/04, B62D 27/02, B62D 25/06

(54) **STRUCTURE DE CAISSE DE VÉHICULE AUTOMOBILE À DÉFORMATION CONTRÔLÉE DE L'ARC PAVILLON EN CAS DE CHOC FRONTAL**
KAROSSERIESTRUKTUR EINES KRAFTFAHRZEUGES MIT KONTROLLIERTER VERFORMUNG DES DACHBOGENS BEI EINEM FRONTALAUFPRALL
MOTOR VEHICLE BODY STRUCTURE WITH CONTROLLED DEFORMATION OF THE ROOF ARCH IN THE EVENT OF A FRONTAL IMPACT

(30) Priorité: 24.05.2022 FR 2204964
(43) Date de publication de la demande: 09.04.2025
(73) Titulaire: Stellantis Auto SAS, 78300 Poissy (FR)
(72) Inventeur: THOR, Tou, 25150 PONT DE ROIDE VERMONDANS (FR)
(74) Mandataire: BCIP
(86) Numéro de dépôt international: PCT/FR2023/050564
(87) Numéro de publication internationale: WO 2023/227838

(56) Documents cités:
- DE-A1- 102014 114 348
- DE-A1- 102020 123 300
- US-A1- 2022 097 769
- US-B2- 11 254 364

## Description

### [Domaine technique]

La présente invention revendique la priorité de la demande française 2204964 déposée le 24 mai 2022.

La présente invention concerne d'une manière générale la structure de caisse des véhicules automobiles. Elle vise en particulier un flanc latéral d'une telle structure de caisse.

### [Technique antérieure]

Les structures de caisse des véhicules automobiles sont formées classiquement à partir de divers éléments métalliques assemblés entre eux tels que notamment un pavillon de toit, un plancher et deux flancs latéraux.

Chaque flanc latéral comprend généralement :
- un pied avant, un pied milieu, et un pied arrière ;
- un longeron de soubassement reliant entre eux en partie inférieure les pieds avant, milieu et arrière ; et
- un cadre latéral de pavillon reliant entre eux en partie supérieure les pieds avant, milieu et arrière.

Les éléments mentionnés ci-dessus délimitent deux ouvertures avant et arrière s'étendant de part et d'autre du pied milieu et prévues pour recevoir respectivement un ouvrant latéral avant et un ouvrant latéral arrière.

Le cadre latéral de pavillon d'un tel flanc latéral de structure de caisse est constitué classiquement par un montant de baie délimitant en partie supérieure l'ouverture avant et par un arc pavillon délimitant en partie supérieure l'ouverture arrière.

S'étendant dans le prolongement longitudinal l'un de l'autre, le montant de baie et l'arc pavillon forment chacun une structure en caisson allongée de section transversale fermée constituée d'une enveloppe externe et d'une doublure interne.

La portion d'extrémité longitudinale avant de l'enveloppe externe de l'arc pavillon est rapportée fixement par l'extérieur et via des points de soudure électriques (PSE) sur la portion d'extrémité longitudinale arrière de ladite enveloppe externe de montant de baie au niveau d'une zone de recouvrement entre ces deux pièces.

Le pied milieu présente également une structure en caisson allongée de section transversale fermée constituée d'une enveloppe externe et d'une doublure interne.

L'enveloppe externe de ce pied milieu présente un sommet élargi rapporté fixement par l'extérieur via des points de soudure électriques (PSE) le long d'une zone d'accostage sur deux portions inférieures, situées dans le prolongement l'une de l'autre, de ladite enveloppe externe de montant de baie et de ladite enveloppe externe d'arc pavillon.

Afin de faciliter la découpe des pièces et optimiser la masse, l'extrémité arrière de l'enveloppe externe de montant de baie et celle du sommet élargi du pied milieu présentent généralement des profils longitudinaux verticaux et sont en outre situées sur un même plan transversal vertical ou quasiment (leur écartement longitudinal ne dépassant pas quelques millimètres), ce qui entraine une variation brutale d'inertie entre la zone se trouvant à l'avant de ce plan de rupture d'inertie (où les trois enveloppes externes se superposent au moins partiellement) et celle située à l'arrière de ce même plan (où seule l'enveloppe externe d'arc pavillon demeure présente).

Lors d'un choc latéral avec un poteau cylindrique, l'intrusion de ce poteau dans l'habitacle est pilotée par la capacité d'absorption d'énergie de la caisse, notamment au niveau du longeron de soubassement et de l'arc pavillon qui sont sollicités fortement en flexion.

Cette sollicitation en flexion causée par un tel choc latéral entraine ainsi le pliage de l'arc pavillon au niveau du plan de rupture d'inertie, ce qui peut perturber le bon déploiement du coussin gonflable de sécurité de type rideau destiné à protéger les occupants assis du côté du véhicule impacté par ce choc latéral.

Le document US 11 254 364 B2 divulgue une structure latérale de caisse avec un montant central et un rail latéral de toit. Il décrit un raidisseur, notamment en forme de W, pour améliorer la rigidité au niveau de la transition montant/rail de toit. Ce document vise à renforcer la résistance aux chocs latéraux. Par ailleurs, ce document divulgue le préambule de la présente revendication 1.

### [Exposé de l'invention]

La présente invention vise donc à mieux maîtriser la déformation de l'arc pavillon en cas de choc latéral.

Elle propose à cet effet un flanc latéral de structure de caisse de véhicule automobile comportant une enveloppe externe de montant de baie et une enveloppe externe d'arc pavillon dont la portion d'extrémité longitudinale avant est rapportée fixement par l'extérieur sur la portion d'extrémité longitudinale arrière de ladite enveloppe externe de montant de baie au niveau d'une zone de recouvrement, ledit flanc latéral comprenant également une enveloppe externe de pied milieu présentant un sommet élargi rapporté fixement par l'extérieur et le long d'une zone d'accostage sur deux portions, situées dans le prolongement l'une de l'autre, respectivement de ladite enveloppe externe de montant de baie et de ladite enveloppe externe d'arc pavillon ;
caractérisé en ce que l'enveloppe externe de montant de baie saille en arrière de l'extrémité arrière dudit sommet élargi de l'enveloppe externe de pied milieu, et en ce que l'extrémité arrière de ladite enveloppe externe de montant de baie présente un profil longitudinal en escalier.

Ce décalage longitudinal entre l'extrémité arrière de l'enveloppe externe de montant de baie et celle du sommet élargi de l'enveloppe externe de pied milieu, ainsi que le profil en escalier de cette extrémité arrière de l'enveloppe externe de montant de baie permettent de faire varier longitudinalement et de manière progressive l'inertie de la partie du cadre latéral de pavillon située en arrière de la zone d'accostage entre le pied milieu, le montant de baie et l'arc pavillon, de sorte à lisser le chargement des contraintes en flexion subies par cette partie du cadre latéral de pavillon en cas de choc latéral.

L'invention permet ainsi d'éviter le pliage de l'enveloppe externe d'arc pavillon lors de la survenance d'un tel choc latéral, de manière à s'assurer que le déploiement du coussin gonflable de sécurité de type rideau s'effectue correctement afin de garantir une protection optimale des occupants assis du côté du véhicule impacté.

Ne nécessitant l'adjonction d'aucune pièce de renfort supplémentaire, l'invention présente en outre l'avantage de n'avoir qu'un très faible impact sur la masse du véhicule.

Selon des caractéristiques préférées dudit flanc latéral selon l'invention :
- ledit profil longitudinal en escalier comprend au moins deux contremarches verticales reliées par une marche horizontale ;
- ledit profil longitudinal en escalier est constitué par une contremarche verticale inférieure avant, une contremarche verticale supérieure arrière, et une marche horizontale reliant lesdites contremarches ;
- l'écartement longitudinal entre lesdites contremarches inférieure avant et supérieure arrière est compris entre 30 et 50 millimètres ;
- l'écartement longitudinal entre l'extrémité arrière dudit sommet élargi de l'enveloppe externe de pied milieu et ladite contremarche inférieure avant est compris entre 40 et 60 millimètres ;
- ladite enveloppe externe de montant de baie présente en section un profil transversal sensiblement en forme de U ouvert vers l'intérieur dudit véhicule, cette enveloppe externe de montant de baie comprenant une âme centrale sensiblement verticale ainsi que deux ailes inférieure et supérieure s'étendant obliquement vers l'intérieur du véhicule depuis cette âme centrale, ladite aile inférieure, respectivement supérieure, se prolongeant à l'opposé de ladite âme centrale par un bord inférieur, respectivement supérieur, replié vers l'extérieur du U ;
- ladite contremarche verticale supérieure arrière s'étend au moins sur la hauteur de ladite âme centrale, sur celle de ladite aile supérieure et sur celle dudit bord supérieur ;
- la portion d'extrémité longitudinale avant de l'enveloppe externe d'arc pavillon coopère à emboitement par concordance de formes sur ladite zone de recouvrement avec la portion d'extrémité longitudinale arrière de l'enveloppe externe de montant de baie ; et/ou
- le sommet élargi de l'enveloppe externe de pied milieu présente une portion arrière coopérant à emboitement par concordance de formes avec une portion inférieure de l'enveloppe externe d'arc pavillon située au niveau de ladite zone de recouvrement.

L'invention vise également sous un second aspect, une structure de caisse de véhicule automobile comportant au moins un tel flanc latéral.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue partielle d'un flanc latéral de structure de caisse de véhicule automobile selon l'invention montrant la zone d'accostage entre le montant de baie, l'arc pavillon et le pied milieu de ce véhicule ;
[Fig 2] est une vue de côté en élévation de la portion d'extrémité arrière de l'enveloppe externe de montant de baie du flanc latéral selon l'invention ;
[Fig 3] représente une vue de côté en élévation de la zone de recouvrement entre le montant de baie et l'arc de pavillon du flanc latéral selon l'invention ;
[Fig 4] est une vue de section prise suivant le plan transversal vertical IV-IV de la figure 3 ;
[Fig 5] représente une vue de section prise suivant le plan transversal vertical V-V de la figure 3 ;
[Fig 6] est une vue de section prise suivant le plan transversal vertical VI-VI de la figure 3 ; et
[Fig 7] représente une vue de section prise suivant le plan transversal vertical VII-VII de la figure 3.

### [Description détaillée]

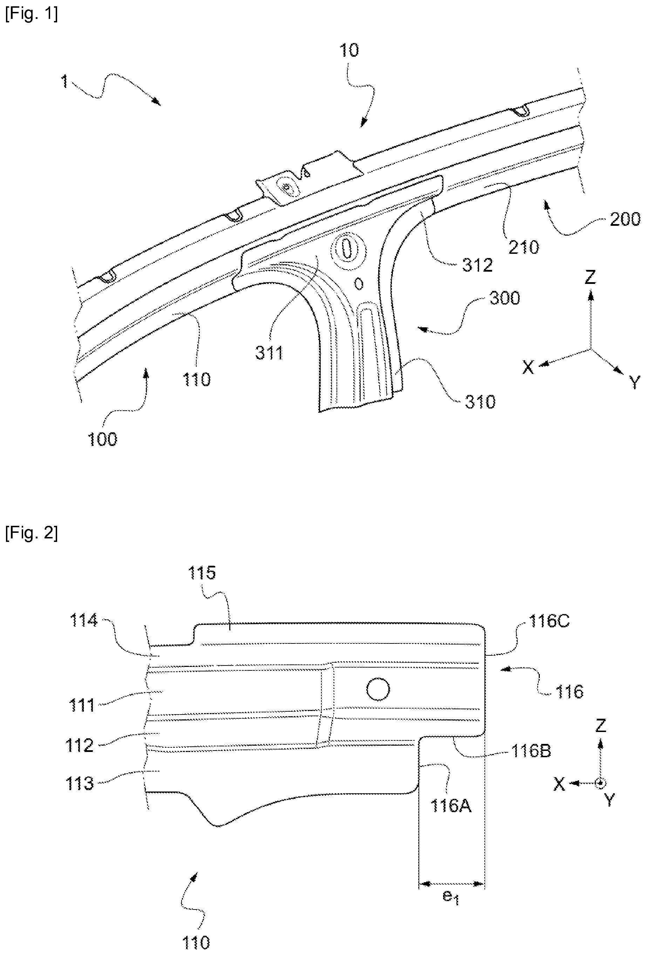

La figure 1 est une vue partielle d'un flanc latéral 1 de structure de caisse de véhicule automobile selon l'invention, montrant la zone d'accostage 10 entre le montant de baie 100, l'arc pavillon 200 et le pied milieu 300,

On définit par rapport à ce véhicule un repère orthogonal direct XYZ comprenant trois axes perpendiculaires deux à deux, à savoir :
- un axe longitudinal horizontal X, parallèle au sol et orienté selon la direction générale de déplacement du véhicule ;
- un axe transversal horizontal Y, également parallèle au sol et perpendiculaire à l'axe X ; et
- un axe vertical Z, perpendiculaire au sol ainsi qu'au plan XY horizontal.

Dans la description qui va suivre et par convention, les termes « inférieur », « supérieur », « avant » et « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction horizontale.

Par ailleurs, le terme « sensiblement » sera utilisé pour indiquer qu'un léger écart est admis par rapport à une position ou disposition nominale prédéterminée, tout en restant inclus dans le cadre de l'invention. Par exemple, « sensiblement vertical » indiquera qu'un écart de l'ordre de 20° par rapport à une orientation strictement perpendiculaire est admis dans le cadre de l'invention.

S'étendent dans le prolongement l'un de l'autre, le montant de baie 100 et l'arc pavillon 200 longitudinal constituent ensemble un cadre latéral de pavillon.

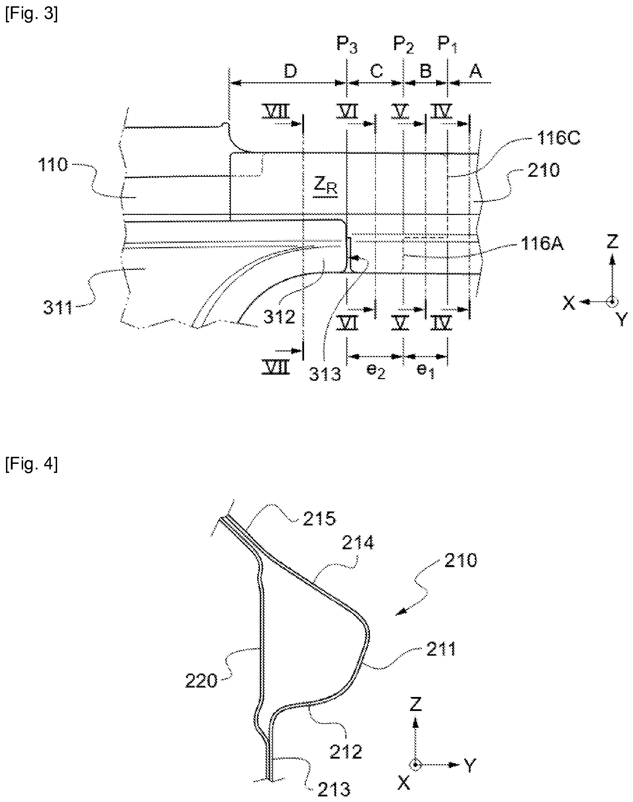

Le montant de baie 100, l'arc pavillon 200 et le pied milieu 300 présentent chacun une structure en caisson allongée de section transversale fermée, constituée par une enveloppe externe 110, 210, 310 et une doublure interne (seule celle 220 de l'arc pavillon étant visible sur les figures 4 à 7).

Les enveloppes externes 110, 210, 310 et doublures internes 210 de ces trois éléments 100, 200, 300 sont obtenues chacune par emboutissage à froid à partir d'une feuille de tôle métallique, préférentiellement en acier à très haute limite d'élasticité (THLE) et présentant avantageusement une épaisseur comprise entre 1,2 et 1,4 millimètres.

L'enveloppe externe de montant de baie 110 présente en section un profil transversal sensiblement en forme de U ouvert vers l'intérieur du véhicule. En référence la figure 2, cette enveloppe externe 110 comprend une âme centrale sensiblement verticale 111 ainsi que deux ailes inférieure 112 et supérieure 114 s'étendant obliquement vers l'intérieur du véhicule depuis cette âme centrale 111.

L'aile inférieure 112 se prolonge à l'opposé de l'âme centrale 111 par un bord inférieur 113 replié vers l'extérieur du U sur lequel vient se fixer par soudure le bord inférieur de la doublure interne du montant de baie 100.

De la même manière, l'aile supérieure 114 se prolonge à l'opposé de l'âme centrale 111 par un bord supérieur 115 replié vers l'extérieur du U sur lequel vient se fixer par soudure le bord supérieur de la doublure interne de ce montant de baie 100.

Toujours en référence à la figure 2, l'extrémité arrière 116 de l'enveloppe externe de montant de baie 110 présente un profil longitudinal en escalier constitué par une contremarche verticale inférieure avant 116A, une contremarche verticale supérieure arrière 116C, et une marche horizontale 116B reliant ces contremarches 116A, 116C.

La contremarche verticale inférieure avant 116A s'étend successivement de bas en haut sur la hauteur du bord inférieur 113 et sur celle d'une portion inférieure de l'aile inférieure 112.

La contremarche verticale supérieure arrière 116C s'étend quant à elle successivement de bas en haut sur la hauteur d'une portion supérieure de l'aile inférieure 112, sur celle de l'âme centrale 111, sur celle de l'aile supérieure 114 et sur celle du bord supérieur 115.

Toujours en référence à cette figure 2, l'écartement longitudinal e₁ entre ces deux contremarches verticales 116A, 116C est avantageusement compris entre 30 et 50 millimètres.

L'enveloppe externe d'arc pavillon 210 présente également en section un profil transversal sensiblement en forme de U ouvert vers l'intérieur. En référence à la figure 4, cette enveloppe externe 210 comprend une âme centrale sensiblement verticale 211 ainsi que deux ailes respectivement inférieure 212 et supérieure 214 s'étendant obliquement vers l'intérieur du véhicule depuis cette âme centrale 211.

L'aile inférieure 212 se prolonge à l'opposé de l'âme centrale 211 par un bord inférieur 213 replié vers l'extérieur du U sur lequel vient se fixer par soudure le bord inférieur de la doublure interne 220 de l'arc pavillon 200.

De la même manière, l'aile supérieure 214 se prolonge à l'opposé de l'âme centrale 211 par un bord supérieur 215 replié vers l'extérieur du U sur lequel vient se fixer par soudure le bord supérieur de la doublure interne 220 de cet arc pavillon 200.

La portion d'extrémité longitudinale avant de l'enveloppe externe d'arc pavillon 210 est rapportée fixement par l'extérieur et via des points de soudure électriques (PSE) sur la portion d'extrémité longitudinale arrière de l'enveloppe externe de montant de baie 110 au niveau d'une zone de recouvrement Z_{R} entre ces deux pièces, représentée en traits interrompus sur la figure 3.

Comme illustré sur les figures 1,3 et 5 à 7, la portion d'extrémité longitudinale avant de l'enveloppe externe d'arc pavillon 210 coopère à emboitement par concordance de formes sur cette zone de recouvrement Z_{R} avec la portion d'extrémité longitudinale arrière de l'enveloppe externe de montant de baie 110.

L'enveloppe externe de pied milieu 310 se présente sous la forme d'un corps creux ouvert vers l'intérieur et s'étendant sensiblement verticalement suivant l'axe Z. Cette enveloppe externe 310 présente un sommet élargi 311 rapporté fixement par l'extérieur via des points de soudure électriques (PSE) et le long d'une zone d'accostage sur deux portions inférieures, situées dans le prolongement l'une de l'autre, de ladite enveloppe externe de montant de baie 110 et de ladite enveloppe externe d'arc pavillon 210.

Comme illustré sur les figures 1, 3 et 7, ce sommet élargi 311 de l'enveloppe externe de pied milieu 310 présente une portion arrière 312 coopérant à emboitement par concordance de formes avec une portion inférieure de l'enveloppe externe d'arc pavillon 210 située au niveau de la zone de recouvrement Z_{R}.

En référence à la figure 3, l'enveloppe externe de montant de baie 110 saille en arrière de l'extrémité arrière 313 du sommet élargi 311 de l'enveloppe externe de pied milieu 310

Plus précisément et comme illustré sur cette figure 3, l'extrémité arrière 313 du sommet élargi 311 de l'enveloppe externe de pied milieu 310 présente un profil longitudinal vertical en étant décalée longitudinalement de la contremarche verticale inférieure avant 116A de l'extrémité arrière 116 de l'enveloppe externe de montant de baie 110 d'un second écartement e₂ prédéterminé, compris avantageusement entre 40 et 60 millimètres.

Ce décalage longitudinal e₂ entre l'extrémité arrière de l'enveloppe externe de montant de baie 110 et celle du sommet élargi 311 de l'enveloppe externe de pied milieu 310, ainsi que le profil en escalier de cette extrémité arrière 116 de l'enveloppe externe de montant de baie 110 permettent de faire varier longitudinalement et de manière progressive l'inertie de la partie du cadre latéral de pavillon située en arrière de la zone d'accostage 10, de sorte à lisser le chargement des contraintes en flexion subies par cette partie du cadre latéral de pavillon en cas de choc latéral et à éviter ainsi le d'éviter le pliage de l'enveloppe externe d'arc pavillon 210 lors de la survenance d'un tel choc latéral.

Dans la portion A s'étendant en arrière du plan vertical transversal P1 et comme illustré par la figure 4, cette inertie est minimale du fait de la présence du côté externe du cadre latéral de pavillon d'une unique épaisseur de tôle (celle de l'enveloppe externe d'arc pavillon 210).

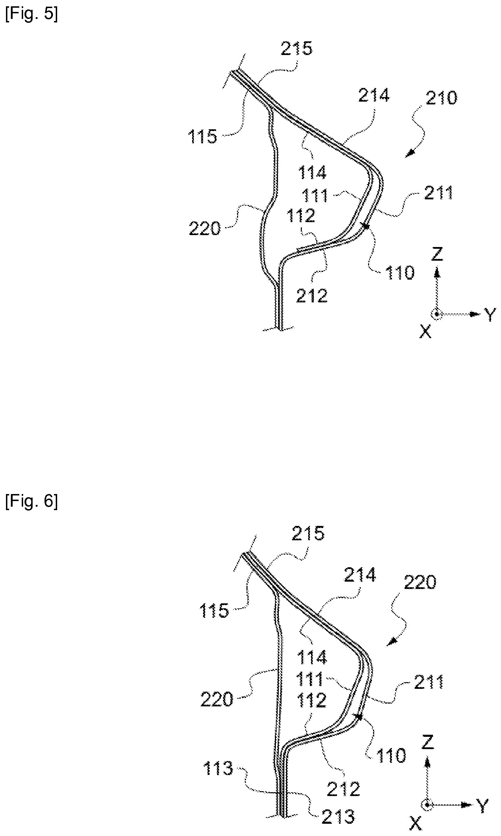

Dans la portion B s'étendant entre les plans verticaux transversaux P1 et P2 et comme illustré par la figure 5, l'inertie est supérieure à cette de la portion A du fait de la présence en partie supérieure du côté externe du cadre latéral de pavillon de deux épaisseurs de tôle superposées (celle de l'enveloppe externe d'arc pavillon 210 et celle de l'enveloppe externe de montant de baie 110).

Dans la portion C s'étendant entre les plans verticaux transversaux P2 et P3 et comme illustré par la figure 6, l'inertie est supérieure à cette de la portion B du fait de la présence sur toute la hauteur du côté externe du cadre latéral de pavillon de deux épaisseurs de tôle superposées (celle de l'enveloppe externe d'arc pavillon 210 et celle de l'enveloppe externe de montant de baie 110).

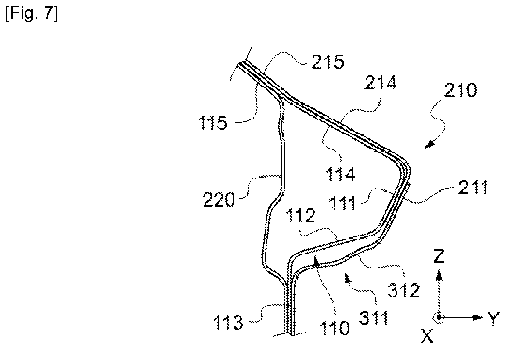

Enfin, dans la portion D s'étendant en avant du plan vertical transversal P3 et comme illustré par la figure 7, l'inertie est maximale du fait de la présence en partie centrale du côté externe du cadre latéral de pavillon de trois épaisseurs de tôle superposées (celle du sommet élargi 311 de l'enveloppe externe de pied milieu 310, celle de l'enveloppe externe d'arc pavillon 210 et celle de l'enveloppe externe de montant de baie 110).

Selon des variantes de réalisation non représentées, les deux contremarches verticales inférieure et supérieure du profil en escalier de l'extrémité arrière de l'enveloppe externe de montant de baie peuvent s'étendre sur des hauteurs différentes. Toutefois et afin d'assurer un meilleur contrôle de la déformation de l'arc pavillon en cas de choc latéral, ladite contremarche verticale supérieure arrière s'étendra de préférence au moins sur la hauteur de ladite âme centrale, sur celle de ladite aile supérieure et sur celle dudit bord supérieur.

Selon d'autres variantes de réalisation non représentées, le profil longitudinal en escalier de l'extrémité arrière de l'enveloppe externe de montant de baie comprend un nombre supérieur de contremarches et de marches (par exemple, trois contremarches et deux marches) de sort à lisser de manière encore plus progressive la variation de l'inertie suivant la direction longitudinale.

Selon encore d'autres variantes de réalisation non représentées, l'extrémité arrière du sommet élargi de l'enveloppe externe de pied milieu peut également présenter un profil en escalier.

De nombreuses autres variantes sont également possibles et on rappellera à cet égard que l'invention ne se limite pas aux formes de réalisation décrites et représentées, mais englobe également toutes les variantes d'exécution à la portée de l'homme du métier. L'invention reste cependant exclusivement définie par les revendications annexées ci-après.

## Revendications

1. Flanc latéral (1) de structure de caisse de véhicule automobile comportant une enveloppe externe de montant de baie (110) et une enveloppe externe d'arc pavillon (210) dont la portion d'extrémité longitudinale avant est rapportée fixement par l'extérieur sur la portion d'extrémité longitudinale arrière de ladite enveloppe externe de montant de baie (110) au niveau d'une zone de recouvrement (Z_{R}), ledit flanc latéral (1) comprenant également une enveloppe externe de pied milieu (310) présentant un sommet élargi (311) rapporté fixement par l'extérieur et le long d'une zone d'accostage sur deux portions, situées dans le prolongement l'une de l'autre, respectivement de ladite enveloppe externe de montant de baie (110) et de ladite enveloppe externe d'arc pavillon (210) ;
**caractérisé en ce que** l'enveloppe externe de montant de baie (110) saille en arrière de l'extrémité arrière (313) dudit sommet élargi (311) de l'enveloppe externe de pied milieu (310), et **en ce que** l'extrémité arrière (116) de ladite enveloppe externe de montant de baie (110) présente un profil longitudinal en escalier.

2. Flanc latéral (1) selon la revendication 1, **caractérisé en ce que** ledit profil longitudinal en escalier comprend au moins deux contremarches verticales (116A, 116C) reliées par une marche horizontale (116B).

3. Flanc latéral (1) selon la revendication 2, **caractérisé en ce que** ledit profil longitudinal en escalier est constitué par une contremarche verticale inférieure avant (116A), une contremarche verticale supérieure arrière (116C), et une marche horizontale (116B) reliant lesdites contremarches (116A, 116C).

4. Flanc latéral (1) selon la revendication 3, **caractérisé en ce que** l'écartement longitudinal (e₁) entre lesdites contremarches inférieure avant (116A) et supérieure arrière (116B) est compris entre 30 et 50 millimètres.

5. Flanc latéral (1) selon l'une des revendications 3 ou 4, **caractérisé en ce que** l'écartement longitudinal (e₂) entre l'extrémité arrière (313) dudit sommet élargi (311) de l'enveloppe externe de pied milieu (310) et ladite contremarche inférieure avant (116A) est compris entre 40 et 60 millimètres.

6. Flanc latéral (1) selon l'une des revendications 1 à 5, **caractérisé en ce que** ladite enveloppe externe de montant de baie (110) présente en section un profil transversal sensiblement en forme de U ouvert vers l'intérieur dudit véhicule, cette enveloppe externe de montant de baie (110) comprenant une âme centrale sensiblement verticale (111) ainsi que deux ailes inférieure (112) et supérieure (114) s'étendant obliquement vers l'intérieur du véhicule depuis cette âme centrale (111), ladite aile inférieure (112), respectivement supérieure (114), se prolongeant à l'opposé de ladite âme centrale (111) par un bord inférieur (113), respectivement supérieur (115), replié vers l'extérieur du U.

7. Flanc latéral (1) selon les revendications 3 et 6, **caractérisé en ce que** ladite contremarche verticale supérieure arrière (116C) s'étend au moins sur la hauteur de ladite âme centrale (111), sur celle de ladite aile supérieure (114) et sur celle dudit bord supérieur (115).

8. Flanc latéral (1) selon l'une des revendications 1 à 7, **caractérisé en ce que** la portion d'extrémité longitudinale avant de l'enveloppe externe d'arc pavillon (210) coopère à emboitement par concordance de formes sur ladite zone de recouvrement (Z_{R}) avec la portion d'extrémité longitudinale arrière de l'enveloppe externe de montant de baie (110).

9. Flanc latéral (1) selon l'une des revendications 1 à 8, **caractérisé en ce que** le sommet élargi (311) de l'enveloppe externe de pied milieu (310) présente une portion arrière (312) coopérant à emboitement par concordance de formes avec une portion inférieure de l'enveloppe externe d'arc pavillon (210) située au niveau de ladite zone de recouvrement (Z_{R}).

10. Structure de caisse de véhicule automobile comportant au moins un flanc latéral (1) selon l'une des revendications 1 à 9.

## Patentansprüche

1. Seitenwand (1) einer Kraftfahrzeugkarosseriekonstruktion mit einer äußeren Karosseriehülle (110) und einer äußeren Dachbogenumhüllung (210), deren vorderer Längsendabschnitt fest von außen auf den hinteren Längsendabschnitt der äußeren Karosseriehülle (110) an einem Überlappungsbereich (ZR) aufgesetzt ist, wobei die Seitenwand (1) auch eine äußere Mittelfußumhüllung (310) mit einer vergrößerten Spitze (311) aufweist, die fest von außen aufgesetzt ist entlang eines Andockbereichs an zwei Abschnitten, die sich jeweils in der Verlängerung der Außenhülle des Schachtträgers (110) und der Außenhülle des Dachbogens (210) befinden; **dadurch gekennzeichnet, dass** die äußere Umhüllung (110) des Bugholms hinter dem hinteren Ende (313) des erweiterten Scheitels (311) der äußeren Mittelfußumhüllung (310) vorsteht und dass das hintere Ende (116) der äußeren Umhüllung (110) des Bugholms ein treppenartiges Längsprofil aufweist.

2. Seitenwand (1) nach Anspruch 1, **dadurch gekennzeichnet, dass** das treppenförmige Längsprofil mindestens zwei vertikale Sprossen (116A, 116C) umfasst, die durch eine horizontale Stufe (116B) verbunden sind.

3. Seitenwand (1) nach Anspruch 2, **dadurch gekennzeichnet, dass** das treppenförmige Längsprofil aus einer vorderen unteren vertikalen Sprosse (116A), einer hinteren oberen vertikalen Sprosse (116C) und einer horizontalen Stufe (116B) besteht, die die Sprossen (116A, 116C) verbindet.

4. Seitenwand (1) nach Anspruch 3, **dadurch gekennzeichnet, dass** der Längsabstand (e1) zwischen der vorderen unteren (116A) und hinteren oberen (116B) Sprosse zwischen 30 und 50 mm beträgt.

5. Seitenflanke (1) nach einem der Ansprüche 3 oder 4, **dadurch gekennzeichnet, dass** der Längsabstand (e2) zwischen dem hinteren Ende (313) des erweiterten Scheitels (311) der äußeren Mittelfußumhüllung (310) und der unteren vorderen Stufe (116A) zwischen 40 und 60 mm beträgt.

6. Seitenwand (1) nach einem der Ansprüche 1 bis 5, **dadurch gekennzeichnet, dass** die Außenhülle (110) des Rahmenstifts im Querschnitt ein im Wesentlichen U-förmiges Profil aufweist, das zum Inneren des Fahrzeugs offen ist, wobei die Außenhülle (110) des Rahmenstifts einen im Wesentlichen vertikalen Mittelkern (111) sowie zwei untere (112) und obere (114) Flügel aufweist, die sich schräg zum Inneren des Fahrzeugs von diesem Mittelkern (111) aus erstrecken, wobei der untere (112) jeweils obere Flügel (114), die sich von dem zentralen Kern (111) weg durch einen unteren (113) bzw. oberen (115) Rand verlängert, der nach außen des U gefaltet ist.

7. Seitenwand (1) nach den Ansprüchen 3 und 6, **dadurch gekennzeichnet, dass** sich die hintere obere vertikale Distanzfläche (116C) wenigstens über die Höhe des zentralen Stegs (111), über die des oberen Flügels (114) und über die des oberen Randes (115) erstreckt.

8. Seitenwand (1) nach einem der Ansprüche 1 bis 7, **dadurch gekennzeichnet, dass** der vordere Längsendabschnitt der äußeren Dachbogenummantelung (210) formschlüssig mit dem hinteren Längsendabschnitt der äußeren Rahmenholmummantelung (110) in Eingriff steht.

9. Seitenflanke (1) nach einem der Ansprüche 1 bis 8, **dadurch gekennzeichnet, dass** der erweiterte Scheitel (311) der äußeren Mittelfußumhüllung (310) einen hinteren Abschnitt (312) aufweist, der formschlüssig mit einem unteren Abschnitt der äußeren Dachbogenumhüllung (210) zusammenwirkt, der sich auf Höhe des Überlappungsbereichs (ZR) befindet.

10. Kraftfahrzeugkarosseriestruktur mit mindestens einer Seitenflanke (1) nach einem der Ansprüche 1 bis 9.

## Claims

1. Motor body structural side flank (1) comprising an outer bay post casing (110) and an outer horn arch casing (210), the front longitudinal end portion of which is fixedly attached from the outside to the rear longitudinal end portion of said outer bay post casing (110) on the level of a covering zone (ZR), said side flank (1) also comprising an outer middle foot casing (310) having an enlarged top (311) fixedly attached from the outside and along a docking zone on two portions, located in the extension of each other, respectively of said outer bay post envelope (110) and said outer flag arch envelope (210);
wherein the outer bay post casing (110) projects in rear with the rear end (313) of said widened apex (311) of the outer middle foot casing (310), and wherein the rear end (116) of said outer bay post casing (110) has a longitudinal stepped profile.

2. Lateral flank (1) according to claim 1, wherein said longitudinal staircase profile comprises at least two vertical risers (116A, 116C) connected by a horizontal step (116B).

3. Lateral flank (1) according to claim 2, wherein said longitudinal staircase profile is constituted by a front lower vertical riser (116A), a rear upper vertical riser (116C), and a horizontal step (116B) connecting said risers (116A, 116C).

4. Lateral flank (1) according to Claim 3, **characterised in that** the longitudinal spacing (e1) between the said front lower riser (116A) and rear upper riser (116B) is between 30 and 50 millimetres.

5. Lateral flank (1) according to either of Claims 3 and 4, **characterised in that** the longitudinal spacing (e2) between the rear end (313) of the said widened apex (311) of the outer envelope of the middle foot (310) and the said front lower riser (116A) is between 40 and 60 millimetres.

6. Lateral flank (1) according to one of Claims 1 to 5, **characterised in that** the said outer bay pillar casing (110) has in section a substantially U-shaped transverse profile which is open towards the inside of the said vehicle, the said outer bay pillar casing (110) comprising a substantially vertical central core (111) and two lower (112) and upper (114) wings extending obliquely towards the inside of the vehicle from the said central core (111), the said lower (112) and upper wings, respectively (114), extending opposite said central core (111) by a lower edge (113), respectively upper edge (115), folded towards the outside of the U.

7. Lateral flank (1) according to Claims 3 and 6, **characterised in that** the said upper rear vertical riser (116C) extends at least over the height of the said central core (111), over that of the said upper wing (114) and over that of the said upper edge (115).

8. Lateral flank (1) according to one of Claims 1 to 7, **characterised in that** the front longitudinal end portion of the outer horn arch envelope (210) cooperates by fitting together by matching shapes on the said covering zone (ZR) with the rear longitudinal end portion of the outer bay post envelope (110).

9. Lateral flank (1) according to one of Claims 1 to 8, **characterised in that** the widened apex (311) of the outer envelope of the middle foot (310) has a rear portion (312) cooperating by interfitting by matching shapes with a lower portion of the outer envelope of the flag arc (210) located on the level of the said covering zone (ZR).

10. Motor vehicle body structure comprising at least one lateral flank (1) according to one of Claims 1 to 9.
